# EUROPEAN PATENT SPECIFICATION

(11) **EP 1 184 427 B1**
(45) Date of publication and mention of the grant of the patent: **09.08.2006**
(21) Application number: 01119947.8
(22) Date of filing: 17.08.2001
(51) Int. Cl.: C09D 11/00, B41J 2/01

(54) **Ink for ink-jet recording, and ink cartridge and recording apparatus including the same**
Tintenstrahltinte, Tintenpatrone und Aufzeichnungsvorrichtung diese Tinte enthaltend
Encre pour l'enregistrement par jet d'encre, cartouche et appareil d'enregistrement contenant cette encre

(30) Priority: 28.08.2000 JP 2000257259
(43) Date of publication of application: 06.03.2002
(73) Proprietor: MATSUSHITA ELECTRIC INDUSTRIAL CO., LTD., Kadoma-shi, Osaka 571-8501 (JP)
(72) Inventor: Soga, Mamoru, Tondabayashi-shi, Osaka 584-0082 (JP); Tatekawa, Masaichiro, Minoo-shi, Osaka 562-001 (JP); Matsuo, Hiroyuki, Neyagawa-shi, Osaka 572-0089 (JP)
(74) Representative: Grünecker, Kinkeldey, Stockmair & Schwanhäusser Anwaltssozietät

(56) References cited:
- EP-A- 1 008 634
- KANAOKA S, SAWAMOTO M, HIGASHIMURA T: "star-Shaped Polymers by Living Cationic Polymerisation. 2. Synthesis of Amphiphilic Star-Shaped Block Polymers of Vinyl Ethers with Hydroxyl Groups." MACROMOLECULES, vol. 24, no. 21, 14 October 1991 (1991-10-14), pages 5741-5745, XP002304855
- KANAOKA S, OMURA T, SAWAMOTO M, HIGASHIMURA T: "Star-Shaped Polymers by Living Cationic Polymerisation. 3. Synthesis of Heteroarm Amphiphilic Star-Shaped Polymers of Vinyl Ethers with Hydroxyl or Carboxyl Pendant Groups." MACROMOLECULES, vol. 25, no. 24, 1992, pages 6407-6413, XP002304856

## Description

### BACKGROUND OF THE INVENTION

The present invention relates to ink suitable for ink-jet recording, and an ink cartridge and a recording apparatus including such ink.

Conventionally, as the ink used for ink-jet recording, ink containing a dye as a coloring material, a humectant, a penetrant, and water is well known. The humectant is contained for preventing drying of the ink in an ink-jet head. The penetrant is contained for improving the penetration of the ink into recording paper.

As the dye, water-soluble dye is often used. To enhance water resistance on recording paper, however, oil soluble dye is preferably used. As ink using an oil soluble dye, known is ink essentially composed of an oil soluble dye, polyoxyethylene oxypropylenetriol, and an aqueous acrylic resin solution or a water-soluble acrylic resin emulsion (see Japanese Laid-Open Patent Publication No. 10-140055). Also known is ink composed of a colored emulsion where a polymer obtained from a dye composition of a monomer composition blended with an oil soluble dye is dispersed in a water-type medium (see Japanese Laid-Open Patent Publication No. 2000-154341).

There is also proposed a technique for dissolving an intrinsically water-insoluble oil soluble dye in water using an amphiphilic star block polymer or an amphiphilic heteroarm star polymer (Polymer Preprints, Japan Vol. 49, No. 1 (2000) pp. 22-24, Macromolecules, Vol. 24, No. 21 (1991) pp. 5741-5745, Macromolecules, Vol. 25, No. 24 (1992) pp. 6407-6413).

Ink used for ink-jet recording must be low in viscosity to some extent. If the viscosity is too high, the ink fails to fly from a nozzle of an ink-jet head as a liquid drop. The ink also must be sufficiently stable so as to be free from coagulating in an ink tank or clogging a nozzle and the like. However, none of the conventional ink containing an oil soluble dye is adequate as the ink for ink-jet recording from the standpoints of viscosity and stability.

For example, the ink disclosed in Japanese Laid-Open Patent Publication No. 10-140055 has a viscosity of about 10000 mPa · s, which is too high for use for ink-jet recording. The ink disclosed in Japanese Laid-Open Patent Publication No. 2000-154341 can have a reduced viscosity, but is poor in stability because it is difficult to maintain the dispersion state for a long time. This ink therefore tends to coagulate during storage or clog an ink head.

A solution obtained from the technique described in Polymer Preprints, Japan Vol. 49, No. 1 (2000) pp. 22-24 is high in surface tension and thus low in the speed of penetration into paper. Therefore, when this ink is used for ink-jet recording, a jetted ink drop dries less easily, causing considerable smearing of characters and images formed on the paper with the ink drop. In addition, since the solution is slow in drying, the oil soluble dye is hard to stay on the surface of the paper. The oil soluble dye rather tends to penetrate through the paper to reach the back of the paper, causing so-called strike-through. Duplex printing is therefore difficult.

In view of the above, ink containing an oil soluble dye and yet having low viscosity and high stability has been desired. The object of the present invention is to provide ink for ink-jet recording that exhibits excellent water resistance on ordinary paper, has high stability, smears less easily, enables duplex printing, and provides recorded products with high printing quality and high image quality, and an ink cartridge and a recording apparatus including such ink.

### SUMMARY OF THE INVENTION

The ink for ink-jet recording of the present invention contains an oil soluble dye, a humectant, a penetrant, water, and an amphiphilic star block polymer of which the outer portion is hydrophilic, and has a surface tension at 25°C in a range of 20 to 50 mN/m.

In the ink for ink-jet recording described above, the viscosity at 25°C is preferably in a range of 1 to 10 mPa·s.

The ink cartridge of the present invention includes ink for ink-jet recording containing an oil soluble dye, a humectant, a penetrant, water, and an amphiphilic star block polymer of which the outer portion is hydrophilic, and having a surface tension at 25°C in a range of 20 to 50 mN/m.

The recording apparatus of the present invention includes ink for ink-jet recording containing an oil soluble dye, a humectant, a penetrant, water, and an amphiphilic star block polymer of which the outer portion is hydrophilic, and having a surface tension at 25°C in a range of 20 to 50 mN/m. Recording is performed by jetting the ink onto a recording medium.

Alternatively, the ink for ink-jet recording of the present invention contains an oil soluble dye, a humectant, a penetrant, water, and an amphiphilic heteroarm star polymer, and has a surface tension at 25°C in a range of 20 to 50 mN/m.

In the ink for ink-jet recording described above, the viscosity at 25°C is preferably in a range of 1 to 10 mPa · s.

Alternatively, the ink cartridge of the present invention includes ink for ink-jet recording containing an oil soluble dye, a humectant, a penetrant, water, and an amphiphilic heteroarm star polymer, and having a surface tension at 25°C in a range of 20 to 50 mN/m.

Alternatively, the recording apparatus of the present invention includes ink for ink-jet recording containing an oil soluble dye, a humectant, a penetrant, water, and an amphiphilic heteroarm star polymer, and having a surface tension at 25°C in a range of 20 to 50 mN/m. Recording is performed by jetting the ink onto a recording medium.

According to the present invention, oil soluble dye molecules are captured by hydrophobic segments of an amphiphilic star polymer. The outer portion of the star polymer is hydrophilic and thus the star polymer itself dissolves in water. The oil soluble dye molecules that are captured in the inner portion of the star polymer also dissolve in water via the star polymer. As a result, the viscosity of the ink decreases and the stability improves.

The surface tension of the ink at 25°C is in the range of 20 to 50 mN/m, which is comparatively low. Therefore, the solvent of the ink, composed of the humectant, the penetrant, and the water, swiftly penetrates into a recording medium after the jetted ink attaches the recording medium. This makes the ink less smearing. In addition, when the recording medium is paper, the oil soluble dye tends to stay in the surface portion of the paper because the oil soluble dye does not interact with cellulose molecules constituting the paper. The phenomenon of strike-through therefore hardly occurs, and thus duplex printing is possible.

The surface tension of the ink is preferably as small as possible from the standpoint of facilitating the penetration into the paper. However, if the surface tension of the ink is smaller than 20 mN/m, it is difficult to form the ink into a liquid drop when the ink is jetted out. In consideration of this, the surface tension of the ink was set at 20 mN/m or more. It should be noted, therefore, that the surface tension of the ink may be smaller than 20 mN/m if nice ink jetting is attained.

The viscosity of the ink is set at a value in the range of 1 to 10 mPa · s. This provides ink having an especially suitable viscosity for ink-jet recording.

As described above, the ink for ink-jet recording according to the present invention contains an amphiphilic star polymer of which the outer portion is hydrophilic. Oil-soluble dye molecules are captured in the star polymer and thus can be dissolved in water. This suppresses the viscosity to a low level and improves the stability.

The ink cartridge and the recording apparatus according to the present invention include the ink for ink-jet recording described above. Using such ink, it is possible to provide recording with high printing quality, high image quality, and excellent water resistance on ordinary paper.

### BRIEF DESCRIPTION OF THE DRAWINGS

FIG. **1** is a schematic structural view of an ink-jet recording apparatus in an embodiment of the present invention.
FIG. **2** is a diagrammatic illustration of an amphiphilic star block polymer in the embodiment.
FIG. **3** is a diagrammatic illustration of an amphiphilic heteroarm star polymer in the embodiment.
FIG. **4** is a diagrammatic illustration of an amphiphilic star block polymer in a comparative example.
FIG. **5** is a diagrammatic illustration of a star polymer in a comparative example.
FIG. **6** is a diagrammatic illustration of a star polymer in a comparative example.
FIG. **7** is a view illustrating a method for synthesizing a star polymer.
FIG. **8** is a view illustrating a method for synthesizing the amphiphilic star block polymer in the embodiment.
FIG. **9** is a view illustrating a method for synthesizing the amphiphilic heteroarm star polymer in the embodiment.

### DESCRIPTION OF THE PREFERRED EMBODIMENTS

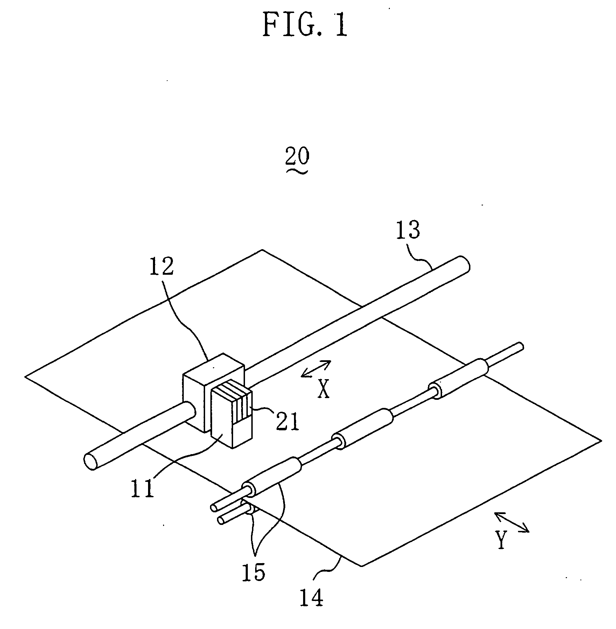

Hereinafter, an embodiment of the present invention will be described with reference to the accompanying drawings. FIG. **1** shows a schematic construction of an ink-jet recording apparatus **20** in the embodiment. The recording apparatus **20** jets ink from an ink-jet head **11** to allow the ink to drop on recording paper **14** as a recording medium so that characters or images are formed on the recording paper **14.** The ink-jet head **11,** which is integrally equipped with an ink cartridge **21** storing ink, is mounted to a carriage **12.** The carriage **12** is provided with a carriage motor not shown. With the carriage motor, the carriage **12** is moved forward and backward in the main scanning direction **X** along a carriage axis **13** that extends in this direction. The carriage **12,** the carriage axis **13,** and the carriage motor constitute a relative movement means for moving the ink-jet head **11** relatively with respect to the recording paper **14.**

The recording paper **14** is sandwiched by a plurality of sets of transport rollers **15, 15** that are rotated with a transport motor not shown, so that the recording paper **14** is transported in the sub-scanning direction **Y** orthogonal to the main scanning direction **X.**

The ink-jet head **11** stores ink containing an oil soluble dye as ink for recording. In addition to the oil soluble dye as a coloring material, the ink also contains a humectant such as glycerin for suppressing drying of the ink in the head member, a penetrant such as diethylene glycol monobutyl ether for enhancing penetration of the ink into the recording paper **14,** and water. The humectant, the penetrant, and water constitute the solvent of the ink. The ink further contains a star polymer.

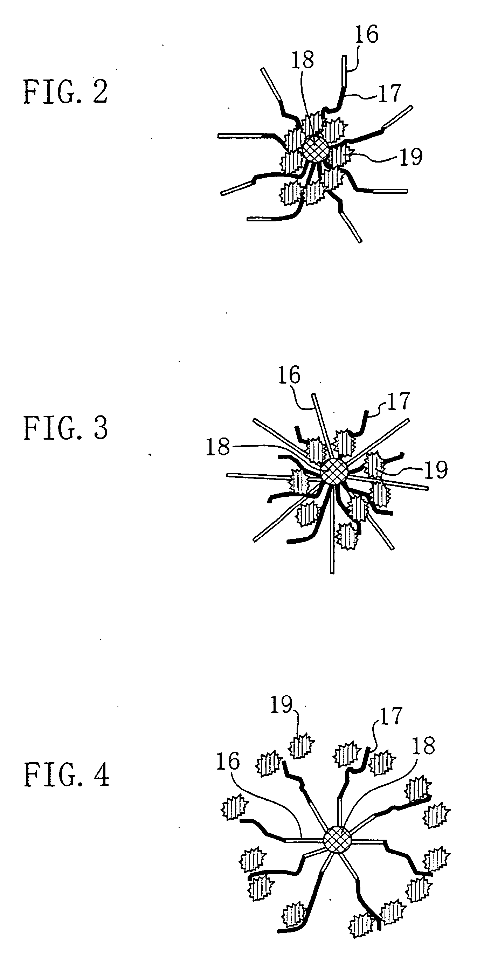

As schematically shown in FIGS. **2** to **6,** various types of star polymers exist. Among these, an amphiphilic star polymer of which the external portion is hydrophilic is contained in the ink in this embodiment. In FIGS. **2** to **6,** the reference numeral **16** denotes a hydrophilic segment, **17** denotes a hydrophobic segment, and **18** denotes a microgel. Specifically, the ink in this embodiment contains an amphiphilic star block polymer as shown in FIG. **2** or an amphiphilic heteroarm star polymer as shown in FIG. **3.** The reason why the types of star polymers used in this embodiment are limited to these two types is as follows.

When ink contains an amphiphilic star block polymer as shown in FIG. **2** where the hydrophilic segments **16** are located in the outer portion while the hydrophobic segments **17** are located in the inner portion, oil soluble dye molecules **19** are captured by the hydrophobic segments **17.** That is, the oil soluble dye molecules **19** are captured in the inner portion of the star polymer. Since the outer portion of the star polymer is hydrophilic, the star polymer itself dissolves in water. As a result, the oil soluble dye molecules **19** captured in the inner portion of the star polymer also dissolve in water via the star polymer. With the existence of such a star polymer, therefore, the viscosity of the ink decreases (preferably to 1 to 10 mPa · s). In addition, the stability of the ink improves since the oil soluble dye molecules **19** are less likely to aggregate with one another.

Likewise, when ink contains an amphiphilic heteroarm star polymer as shown in FIG. **3** where both the hydrophilic segments **16** and the hydrophobic segments **17** extend from the microgel **18** and the hydrophilic segments **16** are longer than the hydrophobic segments **17,** oil soluble dye molecules **19** are captured by the hydrophobic segments **17** in high concentration. Since the outer portion of this star polymer is hydrophilic, the star polymer itself dissolves in water. As a result, in this case, also, the oil soluble dye molecules **19** captured in the inner portion of the star polymer dissolve in water via the star polymer. Therefore, the viscosity of the ink is suppressed low (for example, 1 to 10 mPa · s), and the stability of the ink improves.

On the contrary, the above effects of reduction in viscosity and improvement in stability are not obtained when an amphiphilic star block polymer as shown in FIG. **4** is used where the hydrophilic segments **16** are located in the inner portion while the hydrophobic segments **17** are located in the outer portion. With this construction, oil soluble dye molecules **19** fail to be captured in the inner portion of the star polymer, and rather exist as weakly bound coalescing masses in the outer portion of the star polymer. In addition, since the outer portion of the star polymer is hydrophobic, the star polymer itself does not dissolve in water.

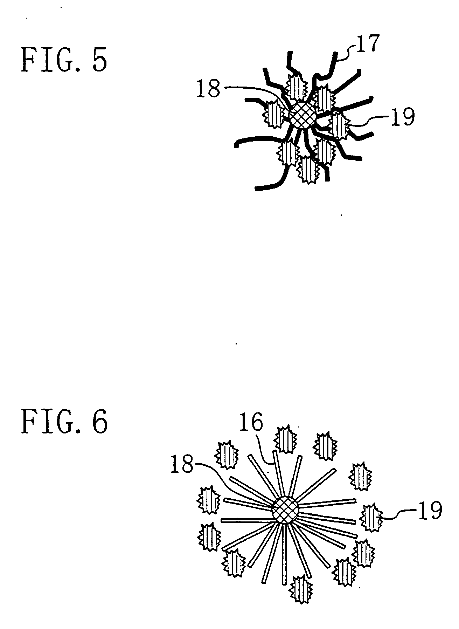

The above effects are not obtained either in the case of using a star polymer as shown in FIG. **5** where only the hydrophobic segments **17** extend from the microgel **18.** In this case, although oil soluble dye molecules **19** are captured by the hydrophobic segments **17,** the star polymer having no hydrophilic segments fails to exhibit hydrophilicity and thus does not dissolve in water.

In the case of using a star polymer as shown in FIG. **6** where only the hydrophilic segments **16** extend from the microgel **18,** the polymer fails to capture oil soluble dye molecules **19** in the inner portion. Therefore, in this case, also, the above effects are not obtained.

For the above reason, an amphiphilic star polymer of which the outer portion is hydrophilic is selected in the ink in this embodiment.

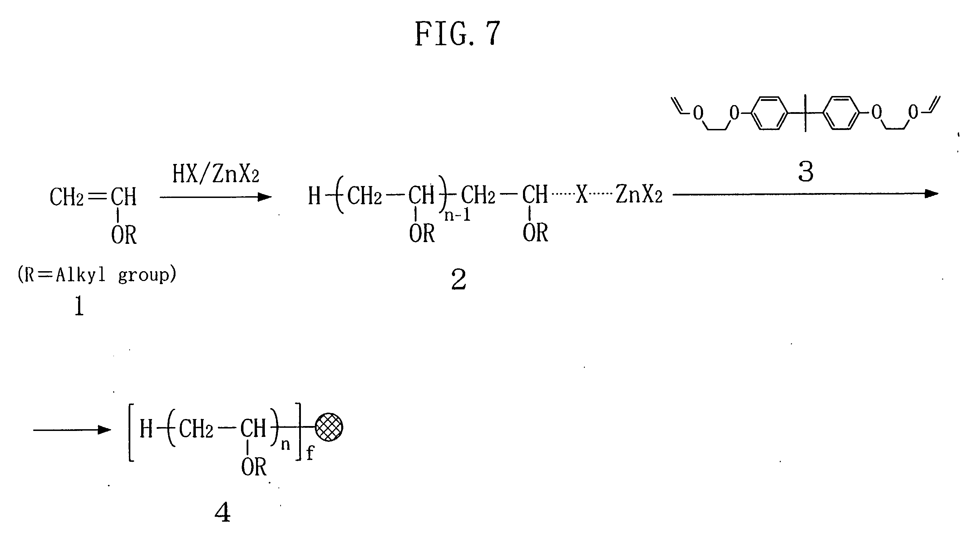

Referring to FIG. **7,** a star polymer as described above is prepared in the following manner. First, vinyl ether **1** is reacted with HX/ZnX₂ (X=Cl, I) to synthesize a living polymer **2** of polyvinyl ether with alkyl groups as side chains. The living polymer **2** is then reacted with divinyl ether **3** to give a star polymer **4**.

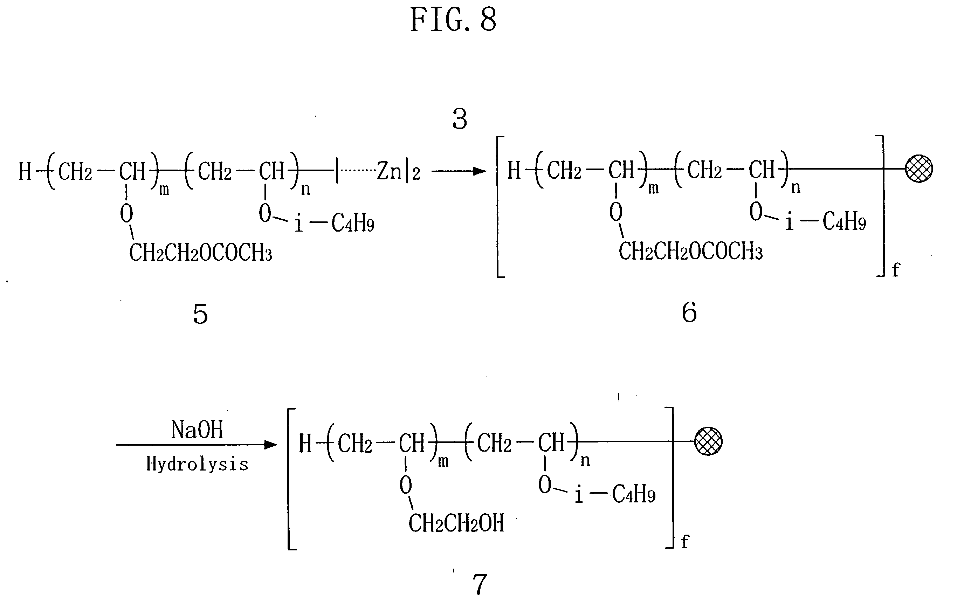

Specifically, the amphiphilic star block polymer of which the outer portion is hydrophilic can be prepared by a synthesizing method shown in FIG. **8.** In this synthesizing method, first, a living block polymer **5** of vinyl ether with ester side chains and alkylvinyl ether is reacted with divinyl ether **3** to give a precursor star polymer **6.** The side chains of this polymer are then hydrolyzed to obtain an amphiphilic star block polymer **7** having hydroxyl groups.

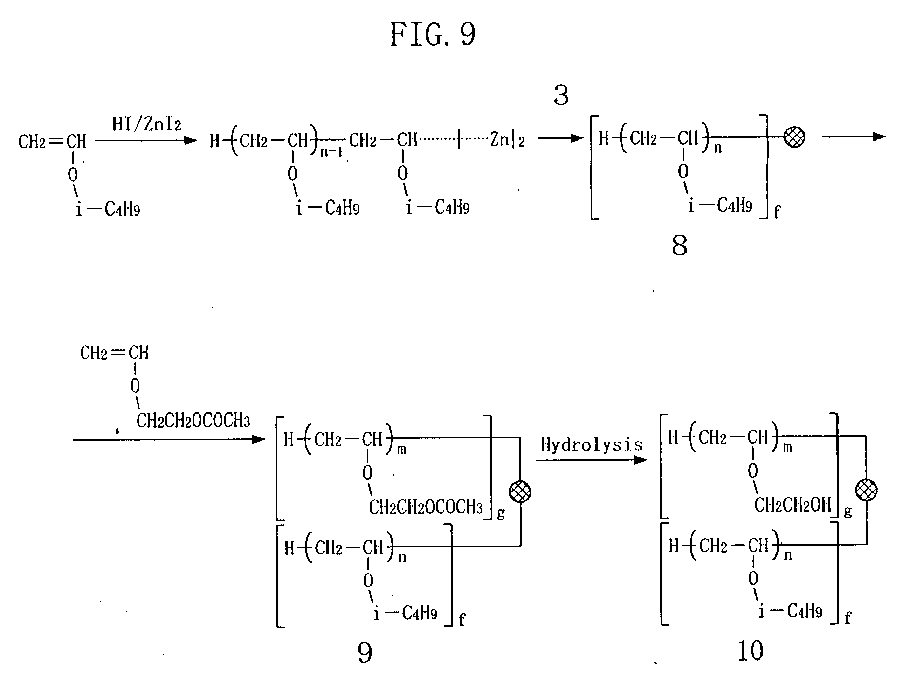

The amphiphilic heteroarm star polymer can be prepared by a synthesizing method shown in FIG. **9.** In this synthesizing method, first, a living block polymer of alkylvinyl ether is reacted with divinyl ether **3** to give a star polymer **8.** The star polymer **8** is then reacted with the vinyl ether with ester side chains to give a precursor star polymer **9.** The side chains of this polymer are then hydrolyzed to obtain an amphiphilic heteroarm star polymer **10.**

Examples of the oil soluble dye contained in the ink include mono-azo dyes, dis-azo dyes, metal complex salt type mono-azo dyes, anthraquinone dyes, phthalocyanine dyes, and triallylmethane dyes. Specifically, it is possible to use one type or two or more types in combination selected from C.I. Solvent Black #3, #5, #7, #22, #23, #27, #29, #34, #123, C.I. Solvent Blue #2, #11, #12, #25, #35, #36, #38, #55, #70, #73, C.I. Solvent Red #1, #3, #8, #23, #24, #25, #27, #30, #49, #81, #82, #83, #84, #100, #109, #118, #121, #122, #132, #179, #218, C.I. Solvent Yellow #2, #6, #14, #15, #16, #19, #21, #33, #45, #56, #61, #77, #80, #82, #149, #151, C.I. Solvent Green #3, C.I. Solvent Orange #1, #2, #6, #14, #37, #40, #44, #45, C.I. Solvent Violet #8, #13, #14, #21, and #27, for example.

### -Examples-

Hereinafter, specific examples carried out will be described.

First, 21 types of ink for ink-jet recording having the following compositions (shown in mass percentage) were prepared (Examples 1 to 21).

### (Example 1)

| | |
|---|---|
| C.I. Solvent Black #3 | 3% |
| Glycerin | 10% |
| Diethylene glycol monobutyl ether | 10% |
| Amphiphilic star block polymer (Formula 7) | 2% |
| Pure water | 75% |

### (Example 2)

| | |
|---|---|
| C.I. Solvent Blue #2 | 3% |
| Glycerin | 10% |
| Diethylene glycol monobutyl ether | 10% |
| Amphiphilic star block polymer (Formula 7) | 2% |
| Pure water | 75% |

### (Example 3)

| | |
|---|---|
| C.I. Solvent Red #1 | 3% |
| Glycerin | 10% |
| Diethylene glycol monobutyl ether | 10% |
| Amphiphilic star block polymer (Formula 7) | 2% |
| Pure water | 75% |

### (Example 4)

| | |
|---|---|
| C.I. Solvent Yellow #2 | 3% |
| Glycerin | 10% |
| Diethylene glycol monobutyl ether | 10% |
| Amphiphilic star block polymer (Formula 7) | 2% |
| Pure water | 75% |

### (Example 5)

| | |
|---|---|
| C.I. Solvent Black #5 | 3% |
| Glycerin | 10% |
| Diethylene glycol monobutyl ether | 10% |
| Amphiphilic heteroarm star polymer (Formula 10) | 2% |
| Pure water | 75% |

### (Example 6)

| | |
|---|---|
| C.I. Solvent Blue #11 | 3% |
| Glycerin | 10% |
| Diethylene glycol monobutyl ether | 10% |
| Amphiphilic heteroarm star polymer (Formula 10) | 2% |
| Pure water | 75% |

### (Example 7)

| | |
|---|---|
| C.I. Solvent Red #3 | 3% |
| Glycerin | 10% |
| Diethylene glycol monobutyl ether | 10% |
| Amphiphilic heteroarm star polymer (Formula 10) | 2% |
| Pure water | 75% |

### (Example 8)

| | |
|---|---|
| C.I. Solvent Yellow #6 | 3% |
| Glycerin | 10% |
| Diethylene glycol monobutyl ether | 10% |
| Amphiphilic heteroarm star polymer (Formula 10) | 2% |
| Pure water | 75% |

### (Example 9)

| | |
|---|---|
| C.I. Solvent Black #7 | 3% |
| Glycerin | 10% |
| Diethylene glycol monobutyl ether | 10% |
| Amphiphilic star block polymer (obtained by substituting an n-hexyl group for the isopropyl group of the star polymer in Formula 7) | 2% |
| Pure water | 75% |

### (Example 10)

| | |
|---|---|
| C.I. Solvent Blue #12 | 3% |
| Glycerin | 10% |
| Diethylene glycol monobutyl ether | 10% |
| Amphiphilic star block polymer (obtained by substituting an n-hexyl group for the isopropyl group of the star polymer in Formula 7) | 2% |
| Pure water | 75% |

### (Example 11)

| | |
|---|---|
| C.I. Solvent Red #8 | 3% |
| Glycerin | 10% |
| Diethylene glycol monobutyl ether | 10% |
| Amphiphilic star block polymer (obtained by substituting an n-hexyl group for the isopropyl group of the star polymer in Formula 7) | 2% |
| Pure water | 75% |

### (Example 12)

| | |
|---|---|
| C.I. Solvent Yellow #14 | 3% |
| Glycerin | 10% |
| Diethylene glycol monobutyl ether | 10% |
| Amphiphilic star block polymer (obtained by substituting an n-hexyl group for the isopropyl group of the star polymer in Formula 7) | 2% |
| Pure water | 75% |

### (Example 13)

| | |
|---|---|
| C.I. Solvent Black #22 | 3% |
| Glycerin | 10% |
| Diethylene glycol monobutyl ether | 10% |
| Amphiphilic heteroarm star polymer (obtained by substituting an n-hexyl group for the isopropyl group of the star polymer in Formula 10) | 2% |
| Pure water | 75% |

### (Example 14)

| | |
|---|---|
| C.I. Solvent Blue #25 | 3% |
| Glycerin | 10% |
| Diethylene glycol monobutyl ether | 10% |
| Amphiphilic heteroarm star polymer (obtained by substituting an n-hexyl group for the isopropyl group of the star polymer in Formula 10) | 2% |
| Pure water | 75% |

### (Example 15)

| | |
|---|---|
| C.I. Solvent Red #23 | 3% |
| Glycerin | 10% |
| Diethylene glycol monobutyl ether | 10% |
| Amphiphilic heteroarm star polymer (obtained by substituting an n-hexyl group for the isopropyl group of the star polymer in Formula 10) | 2% |
| Pure water | 75% |

### (Example 16)

| | |
|---|---|
| C.I. Solvent Yellow #15 | 3% |
| Glycerin | 10% |
| Diethylene glycol monobutyl ether | 10% |
| Amphiphilic heteroarm star polymer (obtained by substituting an n-hexyl group for the isopropyl group of the star polymer in Formula 10) | 2% |
| Pure water | 75 % |

### (Example 17)

| | |
|---|---|
| C.I. Solvent Black #3 | 3% |
| Glycerin | 10% |
| Diethylene glycol monobutyl ether | 20% |
| Amphiphilic star block polymer (Formula 7) | 2% |
| Pure water | 65% |

### (Example 18)

| | |
|---|---|
| C.I. Solvent Black #3 | 3% |
| Glycerin | 10% |
| Diethylene glycol monobutyl ether | 30% |
| Amphiphilic star block polymer (Formula 7) | 2% |
| Pure water | 55% |

### (Example 19)

| | |
|---|---|
| C.I. Solvent Black #3 | 3% |
| Glycerin | 10% |
| Diethylene glycol monobutyl ether | 10% |
| Amphiphilic star block polymer (Formula 7) | 2% |
| Fluorine surfactant (product name "FC-93" available from 3M Ltd.) | 1% |
| Pure water | 74% |

### (Example 20)

| | |
|---|---|
| C.I. Solvent Black #3 | 3% |
| Glycerin | 10% |
| Diethylene glycol monobutyl ether | 5% |
| Amphiphilic star block polymer (Formula 7) | 2% |
| Pure water | 80% |

### (Example 21)

| | |
|---|---|
| C.I. Solvent Black #3 | 3% |
| Glycerin | 10% |
| Diethylene glycol monobutyl ether | 2% |
| Amphiphilic star block polymer (Formula 7) | 2% |
| Pure water | 83% |

Using the respective types of ink for ink-jet recording described above, recording was performed on ordinary paper (product name "Xerox 4024" available from Xerox Corp.) with a commercially available printer. The resultant recorded products exhibited high printing quality and high image quality free from smearing of characters and images. There was no occurrence of strike-through of ink, and clear characters and images were obtained even when duplex printing was performed.

The recorded paper sheets were immersed in pure water and then dried by leaving them at room temperature. The state of the ink after the drying was observed (water resistance test). As a result, no smearing was observed for any types of ink in Examples 1 to 21. It was therefore confirmed that these types of ink had high water resistance.

In addition, the types of ink in examples 1 to 21 were left in an atmosphere of 70°C for three months, and then the state of ink was observed (stability test). As a result, no coagulation/precipitation was observed in any types of ink. It was therefore confirmed that the types of ink in Examples 1 to 21 had high stability.

For comparison, smearing of ink, jetting performance, stability, and the like were examined for conventional types of ink in Comparative Example 1 (see Japanese Laid-Open Patent Publication No. 10-140055), Comparative Example 2 (see Japanese Laid-Open Patent Publication No. 2000-154341), and Comparative Example 3 (see Polymer Preprints, Japan Vol. 49, No. 1 (2000) pp. 22-24).

### (Comparative Example 1)

| | |
|---|---|
| C.I. Solvent Black #27 | 4% |
| Styrene-acrylic acid copolymer | 11% |
| Polyetherpolyol water-soluble acrylic resin emulsion of polyoxyethylene oxypropylene block copolymer having a number-average degree of polymerization of oxyethylene of 60 and that of oxypropylene of 45 and glycerin | 74% |
| Water-soluble acrylic resin emulsion (JOHNCRYL J-61 available from Johnson Polymer Co.) | 6% |
| Triethylene glycol monobutyl ether | 5% |

### (Comparative Example 2)

Ink in Comparative Example 2 was prepared in the following manner. First, 2 g of dodecyl sodium sulfate, 4 g of New Frontier S510, 194 g of deionized water, and 10 g of n-butoxymethylacrylamide were put in a flask, and the temperature of the liquid was raised to 50°C while stirring under nitrogen gas flow. Thereafter, 5 g of an ethanol solution containing 0.5 g of V-70 (oil-soluble azo polymerization initiator, available from Wako Pure Chemical Industries, Ltd.) was poured in the flask, and subsequently a monomer solution having the following composition was dropped over two hours. The resultant solution was stirred at the same temperature for four hours and then cooled to room temperature, to obtain ink of a colored resin emulsion (ink in Comparative Example 2).

### Composition of the monomer solution:

| | |
|---|---|
| n-butoxymethylacrylamide | 89g |
| Ethyleneglycol dimethyl methacrylate | 1g |
| Savinyl Blue GLS (phthalocyanine blue dye available from Clariant Corp.) | 6.3g |
| Savinyl Blue RS (anthraquinone blue dye available from Clariant Corp.) | 18.7g |

### (Comparative Example 3)

| | |
|---|---|
| C.I. Solvent Red #27 | 3% |
| Amphiphilic star block polymer (Formula 7) | 2% |
| Pure water | 95% |

As for the ink in Comparative Example 1, the viscosity at 25°C was as high as 9800 mPa · s. Using this ink, therefore, printing was not possible with a commercially available ink-jet printer.

As for the ink in Comparative Example 2, the viscosity at 25°C was 5 mPa · s immediately after the preparation of the ink. At this time, printing was possible with a commercially available ink-jet printer. However, when the printer was operated again after being left standing for 24 hours, no jet of the ink was obtained. The ink in Comparative Example 2 was also put in a sealed container and left standing in an atmosphere of 70°C for three weeks. As a result, the ink was partly coagulated, and the viscosity increased to 1000 mPa · s.

As for the ink in Comparative Example 3, characters and images printed with a commercially available ink-jet printer using this ink were smeared, making the recorded product totally unrecognizable. In addition, the phenomenon of strike-through of the ink occurred.

In view of the above, unlike the types of ink in Examples 1 to 21, the types of ink in Comparative Examples 1 to 3 described above are found unsuitable for ink-jet recording.

Table 1 below shows the results of measurements of surface tension and viscosity of the types of ink in Examples 1 to 21 and Comparative Examples 1 to 3. From this table, also, it is found that the types of ink in Examples 1 to 21 are suitable for ink-jet recording.

The solvent of the ink of the present invention preferably has a surface tension in the range of 20 to 50 mN/m. Table 1 also shows the surface tension of the solvent of the ink.

**Table 1**

| | Surface tension (ink) | Viscosity (ink) | Surface tension (solvent) |
|---|---|---|---|
| | (mN/m, 25°C) | (cP, 25°C) | (mN/m, 25°C) |
| Example 1 | 34 | 3.1 | 36 |
| Example 2 | 35 | 3.9 | 36 |
| Example 3 | 34.5 | 3.5 | 36 |
| Example 4 | 33 | 3.2 | 36 |
| Example 5 | 33.5 | 3.6 | 36 |
| Example 6 | 34 | 3.3 | 36 |
| Example 7 | 34.5 | 3.7 | 36 |
| Example 8 | 34 | 3.4 | 36 |
| Example 9 | 34.5 | 3.4 | 36 |
| Example 10 | 33 | 3.5 | 36 |
| Example 11 | 33.5 | 3.2 | 36 |
| Example 12 | 34 | 3.6 | 36 |
| Example 13 | 34.5 | 3.3 | 36 |
| Example 14 | 34 | 3.7 | 36 |
| Example 15 | 33 | 3.1 | 36 |
| Example 16 | 33.5 | 3.9 | 36 |
| Example 17 | 31 | 3.6 | 33 |
| Example 18 | 29 | 3.3 | 30 |
| Example 19 | 22 | 3.7 | 24 |
| Example 20 | 39 | 3.4 | 41 |
| Example 21 | 48 | 3.2 | 50 |
| Comparative Example 1 | 33 | 9800 | 34 |
| Comparative Example 2 | 31 | 5 | 29 |
| Comparative Example 3 | 61 | 1.5 | 72 |

## Claims

1. Ink for ink-jet recording containing an oil soluble dye, a humectant, a penetrant, water, and an amphiphilic star block polymer of which the outer portion is hydrophilic, the surface tension of the ink at 25°C being in a range of 20 to 50 mN/m.

2. The ink of Claim 1, wherein the viscosity at 25°C is in a range of 1 to 10 mPa · s.

3. An ink cartridge including ink for ink-jet recording, the ink containing an oil soluble dye, a humectant, a penetrant, water, and an amphiphilic star block polymer of which the outer portion is hydrophilic, the surface tension of the ink at 25°C being in a range of 20 to 50 mN/m.

4. A recording apparatus including ink for ink-jet recording, the ink containing an oil soluble dye, a humectant, a penetrant, water, and an amphiphilic star block polymer of which the outer portion is hydrophilic, the surface tension of the ink at 25°C being in a range of 20 to 50 mN/m,
wherein recording is performed by jetting the ink onto a recording medium.

5. Ink for ink-jet recording containing an oil soluble dye, a humectant, a penetrant, water, and an amphiphilic heteroarm star polymer, the surface tension of the ink at 25°C being in a range of 20 to 50 mN/m.

6. The ink of Claim 5, wherein the viscosity at 25°C is in a range of 1 to 10 mPa · s.

7. An ink cartridge including ink for ink-jet recording, the ink containing an oil soluble dye, a humectant, a penetrant, water, and an amphiphilic heteroarm star polymer, the surface tension of the ink at 25°C being in a range of 20 to 50 mN/m.

8. A recording apparatus including ink for ink-jet recording, the ink containing an oil soluble dye, a humectant, a penetrant, water, and an amphiphilic heteroarm star polymer, the surface tension of the ink at 25°C being in a range of 20 to 50 mN/m,
wherein recording is performed by jetting the ink onto a recording medium.

## Patentansprüche

1. Tinte für die Tintenstrahlaufzeichnung, enthaltend einen öllöslichen Farbstoff, ein Feuchthaltemittel, ein Eindringmittel, Wasser und ein amphiphiles Sternblockpolymer, dessen äußerer Teil hydrophil ist, wobei die Oberflächenspannung der Tinte bei 25°C in einem Bereich von 20 bis 50 mN/m liegt.

2. Tinte nach Anspruch 1, worin die Viskosität bei 25°C in einem Bereich von 1 bis 10 mPa·s liegt.

3. Tintenpatrone, enthaltend Tinte für die Tintenstrahlaufzeichnung, wobei die Tinte einen öllöslichen Farbstoff, ein Feuchthaltemittel, ein Eindringmittel, Wasser und ein amphiphiles Sternblockpolymer enthält, dessen äußerer Teil hydrophil ist, wobei die Oberflächenspannung der Tinte bei 25°C in einem Bereich von 20 bis 50 mN/m liegt.

4. Aufzeichnungsvorrichtung, enthaltend Tinte für die Tintenstrahlaufzeichnung, wobei die Tinte einen öllöslichen Farbstoff, ein Feuchthaltemittel, ein Eindringmittel, Wasser und ein amphiphiles Sternblockpolymer enthält, dessen äußerer Teil hydrophil ist, wobei die Oberflächenspannung der Tinte bei 25°C in einem Bereich von 20 bis 50 mN/m liegt,
worin die Aufzeichnung durch Ausstoßen der Tinte auf ein Aufzeichnungsmedium durchgeführt wird.

5. Tinte für die Tintenstrahlaufzeichnung, enthaltend einen öllöslichen Farbstoff, ein Feuchthaltemittel, ein Eindringmittel, Wasser und ein amphiphiles Heteroarm-Sternpolymer, wobei die Oberflächenspannung der Tinte bei 25°C in einem Bereich von 20 bis 50 mN/m liegt.

6. Tinte nach Anspruch 5, worin die Viskosität bei 25°C in einem Bereich von 1 bis 10 mPa·s liegt.

7. Tintenpatrone, enthaltend Tinte für die Tintenstrahlaufzeichnung, wobei die Tinte einen öllöslichen Farbstoff, ein Feuchthaltemittel, ein Eindringmittel, Wasser und ein amphiphiles Heteroarm-Sternpolymer enthält, wobei die Oberflächenspannung der Tinte bei 25°C in einem Bereich von 20 bis 50 mN/m liegt.

8. Aufzeichnungsvorrichtung, enthaltend Tinte für die Tintenstrahlaufzeichnung, wobei die Tinte einen öllöslichen Farbstoff, ein Feuchthaltemittel, ein Eindringmittel, Wasser und ein amphiphiles Heteroarm-Sternpolymer enthält, wobei die Oberflächenspannung der Tinte bei 25°C in einem Bereich von 20 bis 50 mN/m liegt,
worin das Aufzeichnen durch Ausstoßen der Tinte auf ein Aufzeichnungsmedium durchgeführt wird.

## Revendications

1. Encre pour l'enregistrement par jet d'encre contenant un colorant soluble dans une huile, un agent humectant, un agent pénétrant, de l'eau et un polymère séquencé amphiphile en étoile dont la partie extérieure est hydrophile, la tension superficielle de l'encre à 25°C étant dans la gamme de 20 à 50 mN/m.

2. Encre selon la revendication 1, dans laquelle la viscosité à 25°C est dans une gamme de 1 à 10 mPa.s.

3. Cartouche d'encre comprenant une encre pour l'enregistrement par jet d'encre, l'encre contenant un colorant soluble dans une huile, un agent humectant, un agent pénétrant, de l'eau et un polymère séquencé amphiphile en étoile dont la partie extérieure est hydrophile, la tension superficielle de l'encre à 25°C étant dans la gamme de 20 à 50 mN/m.

4. Appareil d'enregistrement comprenant une encre pour l'enregistrement par jet d'encre, l'encre contenant un colorant soluble dans une huile, un agent humectant, un agent pénétrant, de l'eau et un polymère séquencé amphiphile en étoile dont la partie extérieure est hydrophile, la tension superficielle de l'encre à 25°C étant dans la gamme de 20 à 50 mN/m,
dans lequel l'enregistrement est réalisé par éjection de l'encre sur un support d'enregistrement.

5. Encre pour l'enregistrement par jet d'encre contenant un colorant soluble dans une huile, un agent humectant, un agent pénétrant, de l'eau et un polymère amphiphile en étoile à branches hétérogènes, la tension superficielle de l'encre à 25°C étant dans la gamme de 20 à 50 mN/m.

6. Encre selon la revendication 5, dans laquelle la viscosité à 25°C est dans une gamme de 1 à 10 mPa.s.

7. Cartouche d'encre comprenant une encre pour l'enregistrement par jet d'encre, l'encre contenant un colorant soluble dans une huile, un agent humectant, un agent pénétrant, de l'eau et un polymère amphiphile en étoile à branches hétérogènes, la tension superficielle de l'encre à 25°C étant dans la gamme de 20 à 50 mN/m.

8. Appareil d'enregistrement comprenant une encre pour l'enregistrement par jet d'encre, l'encre contenant un colorant soluble dans une huile, un agent humectant, un agent pénétrant, de l'eau et un polymère amphiphile en étoile à branches hétérogènes, la tension superficielle de l'encre à 25°C étant dans la gamme de 20 à 50 mN/m,
dans lequel l'enregistrement est réalisé par éjection de l'encre sur un support d'enregistrement.
